Europäisches Patentamt

European Patent Office

Office européen des brevets

(11) Publication number: **0 283 746 B1**

# EUROPEAN PATENT SPECIFICATION

(45) Date of publication of patent specification: **06.11.91**

(51) Int. Cl.⁵: **G01N 25/18**, G01K 15/00, G01K 13/02

(21) Application number: **88102701.5**

(22) Date of filing: **24.02.88**

The file contains technical information submitted after the application was filed and not included in this specification

(54) Method for measuring surface temperature of sensors.

(30) Priority: **06.03.87 JP 51520/87**

(43) Date of publication of application:
**28.09.88 Bulletin 88/39**

(45) Publication of the grant of the patent:
**06.11.91 Bulletin 91/45**

(84) Designated Contracting States:
**DE FR GB**

(56) References cited:
EP-A- 0 150 111
US-A- 4 522 512

SOVIET INVENTIONS ILLUSTRATED, week E/43, 8th December 1982, abstract no. 92481 S03, Derwent Publications Ltd., London, GB; & SU - A - 843 469

JOURNAL OF PHYSICS E. SCIENTIFIC INSTRUMENTS, vol. 16, no. 8, August 1983, pages 807-812, Dorking, GB; K. BLUM et al.: "A method for measuring the anisotropy ratio of the thermal conductivity of anisotropic solids"

(73) Proprietor: **SNOW BRAND MILK PRODUCTS & CO., LTD.**
**1-1, Naebo-cho 6-chome Higashi-ku**
**Sapporo-shi Hokkaido 065(JP)**

(72) Inventor: **Hori, Tomoshige**
**No. 90-28, Azuma 8-chome**
**Kitamoto-shi Saitama-ken(JP)**
Inventor: **Itoh, Kensuke**
**No. 238-6, Megurida-cho**
**Kodaira-shi Tokyo(JP)**

(74) Representative: **Hoffmeister, Helmut, Dr. Dipl.-Phys.**
**Patentanwalt Goldstrasse 36**
**W-4400 Münster(DE)**

ATOMKERNENERGIE, vol. 31, no. 2, 1978, pages 117-121; J. BENKERT et al.: "Theoretische und experimentelle Bestimmung des Übertragungsverhaltens von Thermoelementen"

PATENT ABSTRACTS OF JAPAN, vol. 8, no. 219 (P-306)[1656], 5th October 1984; & JP - A - 59 104 538

PATENT ABSTRACTS OF JAPAN, vol. 10, no. 348 (P-519)[2404], 22nd November 1986; & JP - A - 61 148 336

## Description

The present invention relates to a method for measuring a surface temperature $\Theta_s$ of a sensor being in thermal contact to a surrounding fluid, said sensor containing a heat source heatable by an electric current I flowing through an electrical resistor forming a part of said sensor, said surface temperature $\Theta_s$ expressed by the following equation:

$$\Theta_s = \Theta_w - A_{exp} \cdot I^2 (1 + \alpha_w \Theta_w),$$

where

$\Theta_w$ = temperature of the electrical resistor

$\alpha_w$ = temperature coefficient of the electrical resistance

and

$A_{exp}$ is a factor inherent to the sensor.

A method as defined above is disclosed in US-A-4 522 512. The formula for $\Theta_s$ is disclosed and derivable from formulae (6) and (7) of said prior art, if one sets for

$\Theta_s = T_1$
$\Theta_w = T_0$

$$A_{exp} = \frac{(r_1 - r_0)}{K_T \cdot 4\pi \, r_0 \, r_1} \cdot 0,2389 \cdot R_0$$

$R_0$ = resistance of resistor at $0°C$
$R_{Hot}$ = resistance of resistor when heated, i.e.
$R_{Hot} = R_0 (1 + \alpha_w \cdot \Theta_w)$.

Performing the method of said prior art commercially available thermistors are used, having a glass envelope portion surrounding a semiconductor bead. The terms $r_0$, $r_1$, $K_T$, $R_0$ are known or obtained by calibration. However, the aim of the prior art is to measure the thermal conductivity; this measurement therefore relies on the knowledge of the surface temperature $\Theta_s$. In the present patent, the value of the surface temperature $\Theta_s$ is sought.

It is the task of the invention to find a method for measuring a surface temperature $\Theta_s$ of a sensor being in thermal contact with a surrounding fluid which depends on a simple configuration of a sensor and to indicate a method to get correction members for said formula mentioned:

$$\Theta_s = \Theta_w - A_{exp} \cdot I^2 (1 + \alpha_w \Theta_w).$$

The solution is characterized by the use of sensor having a cylindrical body comprising an outer tube (13), a cylindrical electrical resistor (12) inside said tube (13), and a non-conductive core (11) inside said resistor (12), said outer tube (13) having a thermal conductivity $\lambda_3$ being much larger than the conductivity $\lambda_2$ of the electrical resitor (12), so that $\lambda_2/\lambda_3 \approx 0$, by thermally contacting said sensor to another fluid, whose physical properties are known, so that the values of $A_{exp}$ at certain values of $\Theta_w$ can be deduced by the correlation $\Theta_i = (\Theta_s{}' - \Theta_\infty)$

$\Theta_\infty$ = temperature of the surrounding calibration fluid

$\Theta_s{}'$ = surface temperature of said sensor during calibration

as follows

$$A_{exp} = \frac{(\Theta_w - \Theta_\infty - \Theta_i)}{I^2 (1 + \alpha_w \Theta_w)}$$

from known equation $f_i$ for the kinematic viscosity $\nu_1$, thermal conductivity $\lambda_1$, thermal diffusivity $a_i$, coefficient for the volumetric expansion $\beta_i$, and the heat flux $Q_i$ at the surface of said sensor

$$\Delta\theta_i = f_i(\nu_1, \lambda_i, a_i, \beta_i, Q_i)$$

by determining $\nu_1$, $\lambda_i$, $a_i$, $\beta_i$, and $Q_i$ at certain values $\theta_\cdot$ for known fluids and deducing $\Delta\theta$ and $A_{exp}$ for these certain values, by using said determined value $A_{exp}$ for measuring said surface temperature $\theta_s$ of said sensor.

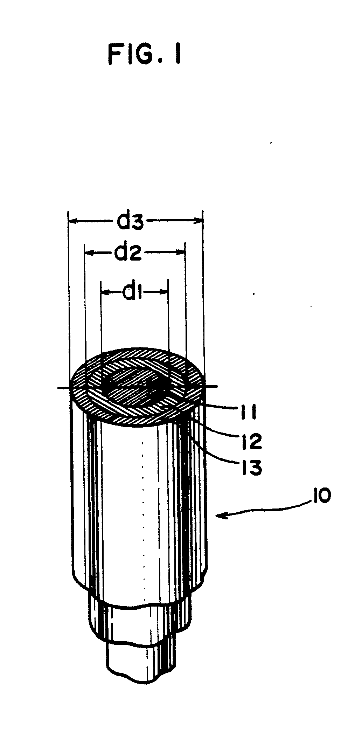

The Figure illustrates a transverse sectional view in perspective of a multiple layer sensor for performing the present invention.

The invention is to be performed with a triple-layer sensor 10. Sensor 10 comprises a cylindrical non-heating core element 11 having a diameter $d_1$, a tubular heating element 12 having the inner diameter $d_1$, an outer diameter $d_2$ and a thermal conductivity $\lambda_2$, and a non-heating outer tube 13 having an inner diameter $d_2$, an outer diameter $d_3$ and a thermal conductivity $\lambda_3$.

A surface temperature of this sensor 10 will be discussed below.

Fourier's heat conduction equation is represented by Equation (1):

$$\frac{\partial\theta}{\partial t} = a\nabla^2\theta + \frac{W}{c\rho} \quad \cdots\cdots \quad (1)$$

Laplacian operator $\nabla^2$ appearing in Equation (1) is expressed as follows, in cylindrical coordinates.

$$\nabla^2 = \frac{\partial^2}{\partial r^2} + \frac{1}{r}\frac{\partial}{\partial r} + \frac{1}{r^2}\frac{\partial^2}{\partial\phi^2} + \frac{\partial^2}{\partial z^2} \quad \cdots\cdots \quad (2)$$

where

r : distance in the radial direction
$\phi$ : rotatory angle of r-axis
z : vertical distance

If the cylinder is extended and heat transfers at the two ends of the cylinder may be ignored in Equation (2), we obtain,

$$\nabla^2 = \frac{d^2}{dr^2} + \frac{1}{r}\frac{d}{dr} \quad \cdots\cdots \quad (2)'$$

Substituting $d_3/2$ for r in the steady-state solution of Equation (1) in which $\nabla^2$ is as Equation (2)', we obtain a surface temperature of outer tube 13, that is a surface temperature $\theta_s$ of the sensor, as an analytic solution of Fourier's heat conduction equation as follows.

$$\theta_s = \theta_w - W\left[\frac{d_2}{8\lambda_3}(d_3-d_2)\left\{1-\left(\frac{d_1}{d_2}\right)^2\right\} + \frac{d_2^2}{16\lambda_2} - \frac{d_1^2}{8\lambda_2}\log\frac{d_2}{2}\right.$$

$$\left. + \frac{1}{8\lambda_2(d_2^2-d_1^2)}\left\{d_1^4\left(\frac{3}{4}-\log\frac{d_1}{2}\right)+d_1^2 d_2^2\left(\log\frac{d_2}{2}-\frac{1}{2}\right)-\frac{1}{4}d_2^4\right\}\right]$$

$$\cdots\cdots\cdots\cdots\cdots \quad (3)$$

where

$\theta_w$    : average temperature of heating element 12

W    : heat generated in the unit volume of element 12

(Both $\theta_w$ and W can be directly measured.)

As thermal conductivity $\lambda_2$ of heating element 12 which is made of metal is significantly larger, e.g. by 1000 times or more than the thermal conductivity $\lambda_3$ of non-heating element such as syntheic resin, $\lambda_3/\lambda_2$ can be assumed as zero.

Hence

$$\theta_s = \theta_w - \frac{W d_2}{8\lambda_3}(d_3 - d_2)\left[1 - \left(\frac{d_1}{d_2}\right)^2\right] \quad\cdots\cdots\cdots\cdots (4)$$

$$\left(\because \ \lambda_2 \gg \lambda_3\right)$$

Even if there is a thermal conductor such as metal membrane coating the surface of outer tube 13, the $\lambda_3/\lambda_2$ value may be assumed as zero.

Secondly, value W in Equation (4) may be expressed in terms of electrical current I passing through heating element 12 by a relational equation separated into two terms, i.e. specific and variable terms. Arranging them, we write surface temperature $\theta_s$ of the sensor in the form

$$\theta_s = \theta_w - \frac{R_0 I^2 (d_3 - d_2)(1 + \alpha_w \theta_w)}{2\pi\ell\lambda_3 d_2}$$

$$= \theta_w - A \cdot I^2 (1 + \alpha_w \theta_w) \quad\cdots\cdots\cdots\cdots (5)$$

where

$R_0$    : electrical resistance of the heating element at $0°C$

$\alpha_w$    : temperature coefficient of the electrical resistance

$\ell$    : length of the sensor

$$A = \frac{R_0(d_3 - d_2)}{2\pi\ell\lambda_3 d_2} \quad\cdots\cdots\cdots (6)$$

Specific value A in Equation (6) is characteristic of the sensor, and theoretically obtained as an analytic solution calculated under the sensor's structural condition. More specifically, specific value A is represented in terms of $R_0$, $d_3$, $d_2$, $\ell$, $\lambda_3$, which are determined according to the sensor's structure. As for $\theta_s$, electrical current I supplied to heating element 12 and temperature $\theta_w$ of heating element 12 can be directly measured, and therefore surface temperature $\theta_s$ of the sensor can be calculated by using Equation (5).

In this manner, a theoretical specific value of A can be obtained by Equation (6). However, actual specific values of existing sensors are different from the theoretical specific value. These differences arise by the heat transfer at the two ends showing not in the radial direction, by manufacturing tolerance of the sensor, etc.

Accordingly in actual embodiments a sensor thermally contacting to a fluid whose physical properties are known, the surface temperature of said sensor is deduced by satisfying a relational equation between the physical properties of the fluid and the surface temperature. The actual specific value in Equation (6)

5

characteristical to the sensor is determined by using the deducted surface temperature.

If the theoretical specific value of a sensor is A and an actual specific value of a manufactured sensor is $A_{exp}$, we have the following formula.

$$A_{exp} = K \cdot A \qquad (7)$$

where K is a correction factor.

The actual specific value $A_{exp}$ can be obtained by the steps of thermally contacting the actual sensor to a fluid whose physical properties are known, deducing a surface temperature of the sensor by solving a relational equation between the physical properties of the fluid and the surface temperature, and calculating the specific value A by using the deduced surface temperature.

In case of employing pure distilled water as a fluid whose physical properties are known as functions of temperature, its kinematic viscosity $\nu$ can be expressed by the following formula.

$$\nu = f(\lambda, \beta, a, \theta_s, \alpha, \theta_\infty) \qquad (8^{-1})$$

for example,

$$\nu^{2C1-C2} = C_o g^{C1} S \ell^{3C1-1} Q^{-1} \lambda \beta^{C1} a^{-C2} (\theta_s - \theta_\infty)^{C1+1} \qquad (8^{-2})$$

where

|  |  |
|---|---|
| g | : gravitational constant |
| S | : surface area of the sensor |
| $\lambda$ | : thermal conductivity |
| Q | : total heat value generated in the sensor |
| $\beta$ | : coefficient of volumetric expansion |
| a | : thermal diffusivity |
| $\alpha$ | : coefficient of heat-transfer |
| $\ell$ | : specific length of the sensor |
| $\theta_\infty$ | : temperature of surrounding fluid |
| $C_0, C_1, C_2$ | : constants in dimensionless heat transfer equation |

equation

$$N_u = C_o \, G_r{}^{c_1} P_r{}^{c_2} \quad \cdots\cdots\cdots\cdots\cdots \quad (8^{-3})$$

where

$$Nu = \frac{\alpha \, d}{\lambda}$$

$$Gr = \frac{\ell^3 g \beta \, (\theta_s - \theta_\infty)}{\nu^2}$$

$$Pr = \frac{\nu}{a}$$

and

$$\alpha = \frac{W \, d_2}{4 \Delta \theta_s} \left\{ 1 - \left( \frac{d_1}{d_2} \right)^2 \right\} \quad \cdots\cdots\cdots \quad (8^{-4})$$

$$W = \frac{R_0 \, i^2 \, (1 + d_w \, \theta_w)}{\pi \left\{ \left( \dfrac{d_2}{2} \right)^2 - \left( \dfrac{d_1}{2} \right)^2 \right\} \ell} \quad \cdots\cdots \quad (8^{-5})$$

Then, setting ($\theta_5 - \theta_\infty$) so as to equalize the right side with the left side of Equation ($8^{-2}$), we obtain the actual specific value $A_{exp}$ inherent in the existing sensor by using the deduced value of $\Delta\theta_s$, as follows:

$$A_{exp} = (\theta_w - \theta_s)/i^2 \, (1 + \alpha_w \, \theta_w) \quad (9)$$

Equation (7) is rewritten by

$$K = \frac{A_{exp}}{A} \quad \cdots\cdots\cdots \quad (10)$$

Substituting Equations (6) and (9) into Equation (10), we obtain,

$$K = \frac{2 \pi \ell \lambda_3 \, d_2 \, (\theta_w - \theta_s)}{R_0 (d_3 - d_2) \, i^2 (1 + \alpha_w \, \theta_w)}$$

As described above, the specific value $A_{exp}$ of a existing sensor can be calculated by the method according to the present invention. Therefore, a surface temperature of a sensor may be calculated by numerical methods in case of measuring unknown physical properties of fluids.

Although sensor 10 in the above explained embodiment is a heating element, it should be noted that the present invention can be applied also to a sensor of an endothermic element.

7

## Claims

1. A method for measuring a surface temperature $\Theta_s$ of a sensor being in thermal contact to a surrounding fluid, said sensor containing a heat source heatable by an electric current I flowing through an electrical resistor forming a part of said sensor, said surface temperature $\Theta_s$ expressed by the following equation:

$$\Theta_s = \Theta_w - A_{exp} \cdot I^2 (1 + \alpha_w \Theta_w),$$

where

$\Theta_w$ = temperature of the electrical resistor

$\alpha_w$ = temperature coefficient of the electrical resistance

and

$A_{exp}$ is a factor inherent to the sensor,

characterized

by the use of a sensor having a cylindrical body comprising an outer tube (13), a cylindrical electrical resistor (12) inside said tube (13), and a non-conductive core (11) inside said resistor (12), said outer tube (13) having a thermal conductivity $\lambda_3$ being much larger than the conductivity $\lambda_2$ of the electrical resitor (12), so that $\lambda_2/\lambda_3 \approx 0$, by thermally contacting said sensor to another fluid, whose physical properties are known, so that the values of $A_{exp}$ at certain values of $\Theta_w$ can be deduced by the correlation $\Delta\Theta_i = (\Theta_s' - \Theta_\infty)$

$\Theta_\infty$ = temperature of the surrounding calibration fluid

$\Theta_s'$ = surface temperature of said sensor during calibration

as follows

$$A_{exp} = \frac{(\Theta_w - \Theta_\infty - \Delta\Theta_1)}{I^2 (1 + \alpha_w \Theta_w)}$$

from known equation $f_i$ for the kinematic viscosity $\nu_1$, thermal conductivity $\lambda_i$, thermal diffusivity $\alpha_i$, coefficient for the volumetric expansion $\beta_i$, and the heat flux $Q_i$ at the surface of said sensor

$$\Delta\Theta_i = f_i(\nu_i, \lambda_i, a_i, \beta_i, Q_i)$$

by determining $\nu_i$, $\lambda_i$, $a_i$, $\beta_i$ and $Q_x$ at certain values $\Theta_\infty$ for known fluids and deducing $\Delta\Theta$ and $A_{exp}$ for these certain values, by using said determined value $A_{exp}$ for measuring said surface temperature $\Theta_s$ of said sensor.

2. Method according to claim 1, characterized by pure distilled water as the fluid for which the deductions are made.

## Revendications

1. Méthode pour mesurer la température de surface $\Theta_s$ d'une sonde en contact thermique avec un fluide environnant, ladite sonde contenant une source de chaleur pouvant être chauffée par un courant électrique I passant dans une résistance électrique faisant partie de ladite sonde, ladite température de surface $\Theta_s$ étant exprimée par l'équation suivante:

$$\Theta_s = \Theta_w - A_{exp} \cdot I^2 (1 + \alpha_w \Theta_w),$$

où

$\Theta_w$ = température de la résistance électrique,

$\alpha_w$ = coefficient thermique de la résistance électrique

et

$A_{ex}$ $_p$ est un facteur propre à la sonde.

caractérisée
par l'utilisation d'une sonde ayant un corps cylindrique comprenant un tube extérieur (13), une résistance électrique cylindrique (12) à l'intérieur dudit tube (13) et une âme non conductrice (11) à l'intérieur de ladite résistance (12), ledit tube extérieur (13) ayant une conductivité thermique $\lambda_3$ très supérieure à la conductivité thermique $\lambda_2$ de la résistance électrique (12), de telle sorte que $\lambda_2/\lambda_3 = 0$, par mise en contact thermique de ladite sonde avec un autre fluide dont les propriétés physiques sont connues, de façon à ce que les valeurs de $A_{exp}$ pour certaines valeurs de $\Theta_w$ puissent être déduites par la corrélation $\Delta\Theta_i = (\Theta_s' - \Theta_\infty)$

où $\Theta_\infty$ = température du fluide d'étalonnage environnant

$\Theta_s'$ = température de surface de ladite sonde lors de l'étalonnage,
sous la forme suivante:

$$A_{exp} = \frac{(\Theta_w - \Theta_0 - \Delta\Theta_1)}{I^2 \, (1 + \alpha_w \, \Theta_w)}$$

à partir de l'équation connue $f_i$ dépendant de la viscosité cinématique $\nu_i$, de la conductivité thermique $\lambda_i$, de la diffusivité $\alpha_i$, du coefficient de dilatation volumique $\beta_i$ et du flux de chaleur $Q_i$ à la surface de ladite sonde:

$$\Delta\Theta_1 = f_i \, (\nu, \, \lambda_i, \, \Phi_i, \, \beta_i, \, Q_i)$$

par détermination de $\nu_i$, $\lambda_i$, $a_i$, $\beta_i$ et $Q_i$ pour certaines valeurs de $\Theta_\infty$ et pour des fluides connus, et déduction de $\Delta\Theta$ et de $A_{exp}$ pour ces valeurs particulières, à partir de ladite valeur déterminée $A_{exp}$ pour mesurer ladite température de surface $\Theta_s$ de ladite sonde.

2. Méthode selon la revendication 1, caractérisée par le fait que de l'eau distillée pure est utilisée comme fluide pour effectuer les déductions.

**Patentansprüche**

1. Verfahren zum Messen der Oberflächentemperatur $\Theta_s$ eines Sensors, der in thermischem Kontakt mit einer ihn umgebenden Flüssigkeit ist, wobei der Sensor eine Wärmequelle besitzt, die durch einen elektrischen Strom I beheizbar ist, der durch einen elektrischen Widerstand fließt, der Teil des Sensors ist, wobei sich die Oberflächentemperatur $\Theta_s$ in folgender Gleichung ausdrückt:

$$\Theta_s = \Theta_w - A_{exp} \cdot I^2 \, (1 + \alpha_w \, \Theta_w),$$

wobei
$\Theta_w$ die Temperatur des elektrischen Widerstandes,
$\alpha_w$ der Temperaturkoeffizient des elektrischen Widerstandes und
$A_{exp}$ ein Faktor ist, der dem Sensor inhärent ist,

gekennzeichnet
durch die Verwendung eines Sensors, der einen zylindrischen Körper hat, der ein äußeres Rohr (13) umfaßt, einen zylindrischen elektrischen Widerstand (12) innerhalb des Rohres (13) und einen nichtleitenden Kern (11) innerhalb des Widerstandes (12), wobei die Wärmeleitfähigkeit $\lambda_3$ des äußeren Rohres (13) viel größer ist als die Wärmeleitfähigkeit $\lambda_2$ des elektrischen Widerstandes (12), so daß $\lambda_2/\lambda_3 \approx 0$ ist,
durch thermisches Kontaktieren des Sensors mit einer anderen Flüssigkeit, deren physikalische Eigenschaften bekannt sind, so daß die Werte von $A_{exp}$ bei bestimmten Werten von $\Theta_w$ durch die Korrelation $\Delta \Theta_i = (\Theta_s' - \Theta_\infty)$
$\Theta_\infty$ = Temperatur der umgebenden Kalibrierflüssigkeit
$\Theta_s'$ = Oberflächentemperatur des Sensors während der Kalibrierung

wie folgt ermittelt werden können

$$A_{exp} = \frac{(\Theta_w - \Theta_\infty - \Delta\Theta_1)}{I^2 (1 + \alpha_w \Theta_w)}$$

von der bekannten Gleichung für $f_i$ für die kinematische Viskosität $\nu_1$, die Wärmeleitfähigkeit $\lambda_1$, die Wärmeübergangszahl $\alpha_1$, den Koeffizienten der volumetrischen Expansion $\beta_1$ und den Wärmefluß $Q_1$ an der Oberfläche des Sensors

$$\Delta\Theta_i = f_i\,(\nu_i, \lambda_i, \alpha_i, \beta_i, Q_i)$$

durch das Bestimmen von $\nu_i$, $\lambda_i$, $\alpha_i$, $\beta_i$ und $Q_i$ bei bestimmten Werten $\Theta_\infty$ für bekannte Fluide und das Ermitteln von $\Delta\Theta$ und $A_{exp}$ für diese bestimmten Werte, wobei der ermittelte Wert $A_{exp}$ benutzt wird zur Messung der Oberflächentemperatur $\Theta_s$ des Sensors.

2. Verfahren gemäß Anspruch 1, daß reines destilliertes Wasser als Fluid benutzt wird, für das die Ableitungen durchgeführt werden.

10

# FIG. 1